# EUROPÄISCHE PATENTSCHRIFT

(11) **EP 3 767 266 B1**
(45) Veröffentlichungstag und Bekanntmachung des Hinweises auf die Patenterteilung: **05.10.2022**
(21) Anmeldenummer: 19186286.1
(22) Anmeldetag: 15.07.2019
(51) Int. Cl.: G01L 19/00, G01L 27/00, G01L 9/00

(54) **DRUCKMITTLERSYSTEM ODER DRUCKMESSUMFORMER MIT INTEGRIERTEM SELBSTTEST**
PRESSURE MEDIUM SYSTEM OR PRESSURE TRANSDUCER WITH INTEGRATED SELF-TEST
SYSTÈME DE TRANSMETTEUR DE PRESSION OU CONVERTISSEUR DE MESURE DE PRESSION À ESSAI AUTOMATIQUE INTÉGRÉ

(43) Veröffentlichungstag der Anmeldung: 20.01.2021
(73) Patentinhaber: VEGA Grieshaber KG, 77709 Wolfach (DE)
(72) Erfinder: HUBER, Jochen, 77709 Wolfach (DE)
(74) Vertreter: Maiwald Patent- und Rechtsanwaltsgesellschaft mbH

(56) Entgegenhaltungen:
- CN-A- 108 982 008
- DE-T5-112014 002 479
- US-A- 4 825 685
- US-A1- 2006 283 256
- US-A1- 2010 058 874

## Beschreibung

### Gebiet der Erfindung

Die Erfindung betrifft allgemein das Gebiet der Sensorik, insbesondere in der Prozessautomation und/oder Prozessindustrie. Im Speziellen betrifft die Erfindung ein Druckmittlersystem zur Ermittlung eines Druckes eines Mediums mit integrierter Selbsttestfunktion, etwa zur Überwachung und/oder Überprüfung einer Funktionstüchtigkeit des Druckmittlersystems und/oder wenigstens einer Komponente davon. Ferner betrifft die Erfindung ein Verfahren zum Überprüfen einer Funktionstüchtigkeit zumindest eines Teils eines Druckmittlersystems.

### Technologischer Hintergrund

Zur Bestimmung eines Drucks eines Mediums, beispielsweise eines Mediums in einem Behälter, werden häufig Druckmittlersysteme eingesetzt, welche in der Regel einen Druckmessumformer und/oder eine Druckmesszelle aufweisen, welche mechanisch vom eigentlichen Prozess und/oder von dem zu vermessenden Medium entkoppelt ist. Hierzu verfügen Druckmittlersysteme über eine Prozessmembran, welche mit einer Seite dem Medium zugewandt sein kann. Die Prozessmembran kann ferner hydraulisch mit der Druckmesszelle gekoppelt sein, so dass ein von dem Medium auf die Prozessmembran ausgeübter Prozessdruck hydraulisch an die Druckmesszelle zumindest teilweise übertragen werden kann. Basierend auf dem an der Druckmesszelle anliegenden Druck kann so ein Drucksignal und/oder ein Messsignal erzeugt und/oder ausgegeben werden, welches proportional zum an der Druckmesszelle anliegenden Druck und/oder proportional zum an der Prozessmembran anliegenden Prozessdruck, d.h. dem Druck des Mediums, sein kann. Basierend auf dem Drucksignal und/oder dem Messsignal kann ferner ein Füllstand des Mediums in dem Behälter ermittelt werden.

Druckmittlersysteme kommen in der Prozessmesstechnik beispielsweise bei Druckmessungen an chemisch aggressiven Medien zum Einsatz, welche Materialien herkömmlicher Drucksensoren angreifen können. Eine hohe chemische Beständigkeit kann bei Druckmittlersystemen etwa durch Verwendung von legiertem Edelstahl, zum Beispiel für die Prozessmembran, bereitgestellt sein. Auch bei hohen Temperaturen des zu vermessenden Mediums kommen Druckmittlersysteme zum Einsatz, da diese eine erhöhte Temperaturbeständigkeit aufweisen können, da die Druckmesszelle nicht unmittelbar den Temperaturen des Mediums ausgesetzt ist.

US 2010/058874 A1 beschreibt ein Verfahren und eine Vorrichtung zur Diagnose von Flüssigkeitsverlusten in einem Druckmesssystem.

US 2006/283256 A1 beschreibt ein Druckmesssystem mit einer Messkammer, welche durch ein zu messendes Medium mittels einer Trennmembran getrennt ist.

US 4 825 685 A beschreibt ein selbst-überwachendes Druckmesssystem, welches eine Referenzkammer, die den Druck durch ein flüssiges Medium auf die flache Seite einer Membran überträgt, aufweist.

DE 11 2014 0024 beschreibt eine Sensorvorrichtung, die einen Drucksensor, eine Verarbeitungseinheit und ein Gehäuse aufweist. Die Sensorvorrichtung soll insbesondere zur Detektion von Fahrzeugkollisionen verwendet werden.

CN 108 982 008 A beschreibt einen hochfrequenten sinusförmigen Druckgenerator und eine Druckerzeugungsmethode.

### Zusammenfassung der Erfindung

Mit Ausführungsformen der Erfindung kann in vorteilhafter Weise ein verbessertes Druckmittlersystem zum Ermitteln eines Drucks, eines Füllstands und/oder eines Grenzstands eines Mediums, beispielsweise eines Mediums in einem Behälter, bereitgestellt werden. Der Druck des Mediums ist nachfolgend auch als Prozessdruck bezeichnet.

Dies wird insbesondere durch die Gegenstände der unabhängigen Patentansprüche ermöglicht. Weiterbildungen der Erfindung ergeben sich aus den Unteransprüchen und der nachfolgenden Beschreibung.

Ein Aspekt der vorliegenden Offenbarung betrifft ein Druckmittlersystem zum Ermitteln eines Druckes, eines Prozessdrucks, eines Füllstands und/oder eines Grenzstands eines Mediums. Das Druckmittlersystem kann im Kontext der vorliegenden Offenbarung einen Druckmessumformer bezeichnen. Das Medium kann flüssig, gasförmig, fluid und/oder ein Feststoff sein. Beispielsweise kann das Medium in einem Behälter, einem Container, einer Leitung, einer Rohleitung und/oder einem beliebigen anderen Behältnis bevorratet sein. Das Druckmittlersystem weist eine Druckmesszelle zur Ausgabe eines Drucksignals auf, welches proportional zu einem an der Druckmesszelle anliegenden Druck ist. Ferner weist das Druckmittlersystem einen Druckmittler mit einem Hydraulikkanal und einer Prozessmembran auf, wobei sich der Hydraulikkanal zwischen der Druckmesszelle und der Prozessmembran erstreckt und dazu ausgebildet ist, ein Füllmedium zu bevorraten, so dass ein auf die Prozessmembran wirkender Prozessdruck des Mediums über das Füllmedium zumindest teilweise auf die Druckmesszelle übertragbar ist. Das Füllmedium kann hierbei mit einem Fülldruck und/oder einem Vordruck beaufschlagt sein. Der Hydraulikkanal kann im Kontext der vorliegenden Offenbarung allgemein ein Hydrauliksystem bezeichnen, welches beispielsweise eines oder mehrere Hydraulikvolumina zur Bevorratung des Füllmediums aufweisen kann. Des Weiteren weist das Druckmittlersystem wenigstens einen Druckerzeuger auf, welcher dazu ausgeführt und/oder eingerichtet ist, das Füllmedium des Hydraulikkanals zumindest temporär und/oder vorrübergehend, beispielsweise während einer Selbsttestphase, mit einem Zusatzdruck zu beaufschlagen. Der Zusatzdruck kann hier und im Folgenden einen Druck zusätzlich zu einem Fülldruck des Füllmediums und/oder zusätzlich zu einem über die Prozessmembran auf das Füllmedium übertragenen Teil des Prozessdrucks bezeichnen. Ferner verfügt das Druckmittlersystem über eine Steuereinheit, welche dazu eingerichtet ist, basierend auf der zumindest temporären Beaufschlagung des Füllmediums mit dem Zusatzdruck zumindest einen Teil des Druckmittlersystems auf Funktionstüchtigkeit zu überprüfen und/oder eine Fehlererkennung durchzuführen.

Durch das Beaufschlagen des Füllmediums mit dem Zusatzdruck kann in vorteilhafter Weise die Funktionstüchtigkeit zumindest eines Teils des Druckmittlersystems, beispielsweise einer oder mehrerer Komponenten des Druckmittlersystems, geprüft werden. Alternativ oder zusätzlich kann auf diese Weise eine Fehlererkennung durchgeführt werden und/oder es kann ein Fehler wenigstens einer Komponente des Druckmittlersystems ermittelt und/oder erkannt werden. Beispielsweise kann die Druckmesszelle, ein Chip der Druckmesszellen, die Prozessmembran, der Hydraulikkanal, die Füllung des Hydraulikkanals mit dem Füllmedium und/oder ein Fülldruck des Füllmediums überprüft werden. Der Selbsttest kann insbesondere während eines laufenden Betriebs des Druckmittlersystems durchgeführt werden. Ein laufender Prozess und/oder die Bestimmung des Prozessdrucks mit dem Druckmittlersystem muss daher nicht unterbrochen werden, um die Funktionstüchtigkeit des Druckmittlersystems zu überprüfen. Somit kann ferner eine Früherkennung potentieller Störungen und/der Fehler des Druckmittlersystems ermöglicht werden. So kann das Druckmittlersystem rechtzeitig gewartet, ausgetauscht, repariert, kalibriert und/oder nachkalibiert werden, beispielsweise bevor eine Störung oder Unterbrechung des Prozesses, etwa durch Totalausfall des Druckmittlersystems, tatsächlich eintritt. Des Weiteren kann die im Rahmen der vorliegenden Offenbarung vorgeschlagene Lösung kosteneffizient und/oder mit geringem Aufwand umgesetzt werden.

Der Druckmittler kann derart ausgebildet sein, dass die Druckmesszelle mechanisch vom Prozess und/oder der Prozessmembran entkoppelt ist. Der Hydraulikkanal des Druckmittlers kann beispielsweise in einem Innenvolumen des Druckmittlers ausgebildet sein. Das Innenvolumen kann hierbei geschlossen und/oder druckdicht sein. Beispielsweise kann das Innenvolumen durch die Prozessmembran, den Hydraulikkanal und die Druckmesszelle definiert und/oder begrenzt sein. Die Prozessmembran kann den Hydraulikkanal mit einer Seite druckdicht verschließen, so dass die eine Seite der Prozessmembran dem Hydraulikkanal und eine gegenüberliegende Seite der Prozessmembran dem Medium zugewandt sein kann. Die Druckmesszelle kann somit über den Hydraulikkanal in Fluidkommunikation mit der Prozessmembran stehen und/oder die Druckmesszelle kann hydraulisch mit der Prozessmembran gekoppelt sein.

Der Druckerzeuger kann im Kontext der vorliegenden Offenbarung ein beliebiges Bauteil sein, welches dazu geeignet ist, das Füllmedium mit dem Zusatzdruck zu beaufschlagen. Beispielsweise kann der Druckerzeuger ein Schwingelement und/oder einen Aktor bezeichnen, welcher in dem Füllmedium eine Schwingung und/oder eine Welle anregen kann. Allgemein kann das Druckelement dazu eingerichtet sein, basierend auf einem elektrischen Signal, etwa einem Signal und/oder Steuersignal der Steuereinheit, den Zusatzdruck zu generieren. Beispielsweise kann der wenigstens eine Druckerzeuger ein piezoelektrischer Druckerzeuger, ein induktiver Druckerzeuger und/oder ein kapazitiver Druckerzeuger sein. Der Zusatzdruck kann hierbei ein statischer Zusatzdruck oder ein zeitlich variabler Zusatzdruck sein. Alternativ oder zusätzlich kann der Druckerzeuger dazu eingerichtet sein, das Füllmedium mit Druckschwankungen zu beaufschlagen.

Die Steuereinheit kann im Kontext der vorliegenden Offenbarung eine Steuerschaltung bezeichnen. Der Druckerzeuger kann mit der Steuereinheit gekoppelt sein und/oder von der Steuereinheit angesteuert werden, beispielsweise mit einem elektrischen Signal und/oder einem Steuersignal, um die Überprüfung des Druckmittlersystems auf Funktionstüchtigkeit durchzuführen. Die Steuereinheit kann ferner dazu eingerichtet sein, den Druckerzeuger dazu zu veranlassen, den Zusatzdruck während einer bestimmten und/oder vordefinierten Zeitperiode, d.h. während einer Anregungszeitdauer (und/oder während einer Selbsttestphase), zu generieren. Das Drucksignal während der Selbsttestphase wird vorliegend auch als Prüfdrucksignal bezeichnet. Die Selbsttestphase kann hierbei die Anregungszeitdauer umfassen, in welcher die Steuereinheit den Druckerzeuger zur Beaufschlagung des Füllmediums mit dem Zusatzdruck ansteuert. Die Selbsttestphase kann jedoch auch eine Abklingzeitdauer umfassen, in welcher der Zusatzdruck wieder (vollständig) absinkt, beispielsweise durch Abklingen wenigstens einer in dem Füllmedium ausgebildeten Welle. Die Selbsttestphase kann somit sowohl die Anregungszeitdauer als auch die Abklingzeitdauer umfassen.

Durch die Steuereinheit und die Beaufschlagung des Füllmediums mit dem Zusatzdruck kann optional eine Veränderung zumindest eines Teils des Druckmittlersystems, beispielsweise relativ zu einem Referenzzustand des Druckmittlersystems, ermittelt werden. Gleichsam kann die Steuereinheit dazu eingerichtet sein, basierend auf der zumindest temporären Beaufschlagung des Füllmediums mit dem Zusatzdruck eine Veränderung zumindest eines Teils des Druckmittlersystems zu ermitteln. Die Veränderung kann insbesondere eine strukturelle Veränderung, eine mechanische Veränderung, eine Zustandsänderung und/oder eine funktionelle Veränderung von einer oder mehreren Komponenten des Druckmittlersystems sein. Mit anderen Worten kann die Veränderung des Druckmittlersystems eine Veränderung und/oder Änderung wenigstens einer strukturellen, mechanischen und/oder funktionellen Eigenschaft des Druckmittlersystems und/oder wenigstens einer Komponente des Druckmittlersystems bezeichnen. Somit können die Komponenten des Druckmittlersystems, insbesondere die Druckmesszelle, ein Chip der Druckmesszellen, die Prozessmembran und/oder der Druckmittler, hinsichtlich deren Funktionstüchtigkeit überprüft und/oder überwacht werden.

Die Erfindung kann als insbesondere auf den nachfolgend erläuterten Erkenntnissen beruhend angesehen werden. Allgemein werden Druckmittlersysteme häufig in rauer Umgebung eingesetzt. Unter anderem können Druckmittlersysteme bei chemisch reaktiven und/oder aggressiven Medien zu Einsatz kommen. Auch werden Druckmittlersysteme häufig bei hohen Prozesstemperaturen des zu vermessenden Mediums eingesetzt. Im Betrieb von Druckmittlersystemen kann es daher unter Umständen zu einem Verschleiß und/oder einer Abtragung von Material der Prozessmembran aufgrund chemischer Reaktionen und/oder mechanischer Einwirkung kommen. Auch kann die Prozessmembran durch mechanischen Krafteinwirkung deformiert und/oder zerstört werden, beispielsweise durch Druckschläge, Dampfschläge und/oder Partikel im Medium. Auch kann ein Verlust von Füllmedium im Druckmittler eintreten. Zudem kann es bei hohen Temperaturen zur Bildung von Gas und/oder Luftblasen im Druckmittlersystem und somit zu einer Änderung des Drucks des Füllmediums im Druckmittler kommen. Da Druckmittlersysteme häufig zum Messen von Drücken im Bereich von wenigen mbar Absolutdruck bei Temperaturen von bis zu rund 400°C oder mehr eingesetzt werden, kann eine Änderung des Füllrucks des Füllmediums die Messung des Prozessdrucks des Mediums beeinflussen. Bei sinkendem Fülldruck des Füllmediums im Druckmittler kann der Siedepunkt des Füllmediums sinken. Dies wiederum kann zur Folge haben, dass das Druckmittlersystem nur noch in einem eingeschränkten Temperaturbereich eingesetzt werden kann. Wird dieser Temperaturbereich überschritten, so beginnt das Füllmedium mit dem Ausgasen von Gasen, welche im Füllmedium gebunden sind, und das Füllmedium beginnt zu sieden. Das Ausgasen der Gase in das Füllmedium führt zu einer Veränderung des Fülldruckes des Füllmediums im Druckmittler. Insgesamt kann eine derartige Veränderung des Fülldrucks des Füllmediums zu einem Drift des Druckmittlersystems im Nullpunkt und/oder in der Ruhelage des Druckmittlersystems führen. Bei konventionellen Druckmittlersystemen kann dieser Drift vom Druckmittlersystem und damit vom Anwender nicht erkannt werden. Dies kann eine Kalibrierung der Druckmesszelle und/oder des Druckmittlersystems in regelmäßigen Zeitabständen erfordern. Auch ein Totalausfall des Druckmittlersystems und/oder ein Austritt von Füllmedium kann vorkommen.

Das erfindungsgemäße Druckmittlersystem mit dem wenigstens einen Druckerzeuger erlaubt hingegen in vorteilhafter Weise, voranstehend genannte Veränderungen des Druckmittlersystems zu ermitteln und/oder eine Überprüfung des Druckmittlersystems im Hinblick auf derartige Veränderungen durchzuführen. Insbesondere kann so eine Früherkennung der Veränderung am Druckmittlersystem und/oder eine Früherkennung eines potentiellen Fehlers ermöglicht werden. Dies erlaubt wiederum, rechtzeitig Gegenmaßnahmen einzuleiten. Auch kann ein regelmäßiges Kalibrieren des erfindungsgemäßen Druckmittlersystems in vorteilhafter Weise entfallen und/oder eine Häufigkeit des Kalibrierens kann reduziert sein.

Des Weiteren kann bei Druckmittlersystemen und/oder Sensoren im Allgemeinen ein Selbsttest für eine Zulassung gefordert sein. Häufig werden hierfür elektronische Selbsttest, beispielsweise mit Referenzgrößen, durchgeführt. Um Sensoren bzw. Druckmittlersysteme mit einem elektronischen Selbsttest, etwa einem Built-In-Self-Test (BIST), auszustatten, können mitunter aufwendige Änderungen und Modifikationen an der Elektronik notwendig sein. Ein derartiger Aufwand kann hingegen mit dem erfindungsgemäßen Druckmittlersystem entfallen, insbesondere da der Druckerzeuger als separates Bauteil, etwa zusätzlich zu weiteren Elektronikkomponenten des Druckmittlersystems, verbaut werden kann. Zur Verschaltung des Druckerzeugers können zudem unter Umständen bereits vorhandene Kabeldurchführungen verwendet werden, ohne dass weitreichende Modifikationen am Druckmittlersystem erforderlich sind. Die Erfindung kann somit auf einfache und kosteneffiziente Weise in bereits bestehende Druckmittlersysteme integriert werden. Zudem kann durch das Beaufschlagen des Füllmediums mit dem Zusatzdruck eine im Vergleich zu elektronischen Selbsttests weiterreichende und/oder umfassendere Überprüfung des Druckmittlersystems bereitgestellt sein. Unter anderem können mehrere Komponenten und/oder Fehler des Druckmittlersystems gleichzeitig geprüft werden. Beispielsweise kann mit der Erfindung in vorteilhafter Weise, die Prozessmembran, der Hydraulikkanal, die Füllung des Hydraulikkanals mit Füllmedium, der Fülldruck des Füllmediums, der Chip der Druckmesszelle und/oder die Druckmesszelle selbst überprüft werden. Auch kann ein Energieverbrauch des Druckerzeugers gering sein, so dass das Druckmittlersystem energieeffizient auf Funktionstüchtigkeit überprüft werden kann. Gemäß einer Ausführungsform ist der wenigstens eine Druckerzeuger dazu eingerichtet, das Füllmedium des Hydraulikkanals zumindest temporär und/oder zeitlich vorrübergehend mit einem statischen Zusatzdruck zu beaufschlagen. Zusätzlich ist der Zusatzdruck ein statischer Zusatzdruck. Das Generieren eines statischen Zusatzdrucks kann insbesondere ermöglichen, während der Beaufschlagung mit dem Zusatzdruck und/oder während der Selbsttestphase mit der Druckmesszelle ein zuverlässiges Drucksignal (und/oder Prüfdrucksignal) zu generieren und/oder einen zuverlässigen Prüfdruckwert zu ermitteln. Insgesamt kann so die Überprüfung des Druckmittlersystems auf Funktionstüchtigkeit verbessert werden.

Es ist jedoch zu beachten, dass die Erfindung nicht auf das Generieren eines statischen Zusatzdrucks beschränkt ist. Vielmehr kann der während der Selbsttestphase erzeugte Zusatzdruck zeitlich variabel sein. Auch kann während eines Teils der Selbsttestphase, z.B. während der Anregungszeitdauer, ein statischer Zusatzdruck und während eines weiteren Teils der Selbsttestphase, z.B. während der Abklingzeitdauer, ein zeitlich variabler Zusatzdruck von dem Druckerzeuger generiert werden.

Erfindungsgemäß ist der wenigstens eine Druckerzeuger dazu eingerichtet, den Zusatzdruck in dem Füllmedium des Hydraulikkanals durch Anregen wenigstens einer stehenden Welle mit wenigsten einer Resonanzfrequenz zu erzeugen. Die Resonanzfrequenz kann dabei eine Eigenresonanz bzw. Eigenmode des Hydraulikkanals bezeichnen, beispielsweise in wenigstens einer Raumrichtung. Wie voranstehend erläutert kann der Hydraulikkanal im Kontext der vorliegenden Offenbarung ein Hydrauliksystem bezeichnen, welches beispielsweise eines oder mehrere Hydraulikvolumina aufweisen kann. Die wenigstens eine stehende Welle kann grundsätzlich in beliebiger Raumrichtung innerhalb des Hydraulikkanals ausgebildet werden, um so den Zusatzdruck zu erzeugen. Zumindest ein Teil des Hydraulikkanals kann somit als Resonator dienen, in welchem die wenigstens eine stehende Welle mit der zugehörigen Resonanzfrequenz des Resonators angeregt werden kann. Die Resonanzfrequenz ist dabei durch die Geometrie des als Resonator wirkenden Teils des Hydraulikkanals definiert, bestimmt und/oder festgelegt. Es sei an dieser Stelle bemerkt, dass der Druckerzeuger eine stehende Welle beliebiger Ordnung und/oder mehrere stehende Wellen erzeugen kann.

Gemäß einer Ausführungsform ist der wenigstens eine Druckerzeuger dazu eingerichtet, den Zusatzdruck in dem Füllmedium des Hydraulikkanals durch Anregen einer Mehrzahl stehender Wellen zu erzeugen, wobei sich die Resonanzfrequenzen der mehreren stehenden Wellen zumindest teilweise voneinander unterscheiden. Beispielsweise kann der Druckerzeuger mehrere stehende Wellen erzeugen, welche sich hinsichtlich ihrer. Ordnung und/oder der Ordnung der zugehörigen Resonanzfrequenz zumindest teilweise unterscheiden können. Alternativ oder zusätzlich können mehrere stehende Wellen in zumindest teilweise unterschiedlichen Raumrichtungen ausgebildet werden. Beispielsweise kann der Druckerzeuger dazu eingerichtet sein, in mehreren Teilen des Hydraulikkanals jeweils eine stehende Welle mit der zugehörigen Resonanzfrequenz des jeweiligen Teils des Hydraulikkanals zu erzeugen. Z.B. kann der Druckerzeuger eine stehende Welle parallel und eine weitere stehende Welle orthogonal zu einer axialen Richtung des Druckmittlersystems erzeugen. Die axiale Richtung kann hierbei parallel zu einem Flächennormalenvektor der Prozessmembran und/oder parallel zu einer Mittelachse (bzw. Symmetrieachse) der Prozessmembran verlaufen.

Gemäß einer Ausführungsform ist der wenigstens eine Druckerzeuger dazu eingerichtet, die stehenden Wellen der Mehrzahl von stehenden Wellen sequentiell, zeitlich versetzt zueinander und/oder nacheinander anzuregen. Dies kann eine umfassende Überprüfung der Funktionstüchtigkeit ermöglichen und insgesamt eine Fehlererkennung verbessern. Auch kann so eine Plausibilitätsprüfung eines möglichen Fehlers erfolgen.

Gemäß einer Ausführungsform ist der wenigstens eine Druckerzeuger direkt mit dem Füllmedium des Hydraulikkanals gekoppelt. Alternativ oder zusätzlich ist der wenigstens eine Druckerzeuger zumindest teilweise in dem Hydraulikkanal angeordnet. Dies kann insbesondere ermöglichen, das erfindungsgemäße Druckmittlersystem in kompakter Bauweise zu fertigen.

Gemäß einer Ausführungsform ist der wenigstens eine Druckerzeuger indirekt mit dem Füllmedium des Hydraulikkanals gekoppelt. Alternativ oder zusätzlich ist der wenigstens eine Druckerzeuger zumindest teilweise außerhalb des Hydraulikkanals angeordnet. Mit anderen Worten kann das Füllmedium von außen mit dem Zusatzdruck beaufschlagt werden. Eine derartige Beaufschlagung kann beispielsweise über die Prozessmembran erfolgen. Auch kann eine derartige Beaufschlagung beispielsweise über ein Relativdruckausgleichsröhrchen und/oder ein Ausgleichsröhrchen der Druckmesszelle erfolgen.

Gemäß einer Ausführungsform ist die Steuereinheit dazu eingerichtet, die Funktionstüchtigkeit zumindest des Teils des Druckmittlersystems basierend auf einem Prüfdrucksignal der Druckmesszelle zu überprüfen, wobei das Prüfdrucksignal das Drucksignal der Druckmesszelle ist, welches während der Beaufschlagung das Füllmediums des Hydraulikkanals mit dem Zusatzdruck von der Druckmesszelle ermittelt ist. Das Prüfdrucksignal kann hierbei sowohl das während der Anregungszeitdauer als auch während der Abklingzeitdauer ausgegebene Drucksignal bezeichnen. Das Prüfdrucksignal kann hierbei repräsentativ für einen an der Druckmesszelle anliegenden Gesamtdruck sein, welcher sich beispielsweise aus einem Fülldruck des Füllmediums, dem Zusatzdruck und optional einem von der Prozessmembran auf das Füllmedium übertragenen Druck (bzw. Teil des Prozessdrucks) zusammensetzen kann. Alternativ oder zusätzlich kann die Steuereinheit dazu eingerichtet sein, einen Fehler und/oder eine Fehlfunktion basierend auf dem Prüfdrucksignal zu ermitteln. Eine Heranziehung des Prüfdrucksignals zur Überprüfung der Funktionstüchtigkeit des Druckmittlersystems kann beispielsweise ermöglichen, die Druckmesszelle selbst auf Funktionstüchtigkeit zu prüfen und/oder den Hydraulikkanal hinsichtlich eines Druckverlustes, etwa relativ zu einem vordefinierten Vordruck des Füllmediums, zu überprüfen. Ein derartiger Druckverlust kann beispielsweise aufgrund einer Leckage bzw. eines Austritts von Füllmedium aus dem Hydraulikkanal und/oder durch Ausgasen hervorgerufen sein.

Gemäß einer Ausführungsform ist die Steuereinheit dazu eingerichtet, basierend auf dem Prüfdrucksignal wenigstens einen Prüfdruckwert, etwa einen Wert des Prüfdrucksignals, zu ermitteln, wobei die Steuereinheit dazu eingerichtet ist, zur Überprüfung der Funktionstüchtigkeit zumindest des Teils des Druckmittlersystems den wenigstens einen Prüfdruckwert mit wenigstens einem Referenzwert zu vergleichen. Der Referenzwert kann beispielsweise in einem Speicher, etwa einem elektronischen Speicher, des Druckmittlersystems hinterlegt sein und repräsentativ für einen in einem Referenzzustand des Druckmittlersystems erwarteten Wert des Prüfdrucksignals sein. Beispielsweise kann der Referenzwert für einen vorbestimmten Vordruck des Füllmediums und eine volle Funktionstüchtigkeit der Druckmesszelle definiert sein. Durch den Vergleich des Prüfdruckwerts mit dem Referenzwert kann so zuverlässig eine Abweichung des aktuellen Fülldrucks des Füllmediums zu dem Vordruck ermittelt werden.

Gemäß einer Ausführungsform weist die Druckmesszelle einen Chip, etwa einen Halbleiterchip und/oder einen Silizium-basierten Chip, auf, wobei die Steuereinheit dazu eingerichtet ist, basierend auf der zumindest temporären Beaufschlagung des Füllmediums mit dem Zusatzdruck eine Funktionstüchtigkeit des Chips zu überprüfen. Durch das erfindungsgemäße Druckmittlersystem mit dem Druckerzeuger kann somit in vorteilhafter Weise die Funktion des Chips überprüft werden, ohne dass hierfür der Chip selbst modifiziert und/oder etwa mit einer BIST-Funktion ausgestattet werden müsste.

Gemäß einer Ausführungsform ist die Steuereinheit dazu eingerichtet, basierend auf der zumindest temporären Beaufschlagung des Füllmediums mit dem Zusatzdruck einen Fülldruck des Füllmediums zu ermitteln und/oder eine Veränderung eines Fülldrucks des Füllmediums relativ zu einem Referenzfülldruck zu bestimmen. Der Referenzfülldruck kann etwa ein Vordruck sein, mit dem das Füllmedium werksseitig beaufschlagt wird. Beispielsweise kann die Steuereinheit dazu eingerichtet sein, eine Abweichung des Fülldrucks von dem Referenzfülldruck zu ermitteln. Wie voranstehend erläutert, kann eine Veränderung des Fülldrucks des Füllmediums zu einem Drift und/oder einer Verschiebung des Nullpunkts des Druckmittlersystems führen. Dies wiederum kann zu einer Verfälschung des mit dem Druckmittlersystem ermittelten Prozessdrucks führen. Ein derartiger Fehler kann durch das erfindungsgemäße Druckmittlersystem in zuverlässiger Weise erkannt werden. Auch kann basierend auf dem ermittelten Fülldruck und/oder einer ermittelten Abweichung des Fülldrucks vom Referenzdruck eine Kalibrierung des Druckmittlersystems erfolgen. Diese kann beispielsweise automatisiert von der Steuereinheit ausgelöst und/oder durchgeführt werden. Insgesamt kann dies einen Wartungsaufwand und/oder einen Kalibrieraufwand für das Druckmittlersystem verringern.

Die Steuereinheit kann den Druckerzeuger mit einem elektrischen Signal, etwa einem Steuersignal, ansteuern und der Druckerzeuger kann basierend auf dem elektrischen Signal die wenigstens Welle in dem Füllmedium anregen, insbesondere gezielt anregen. In diesem Fall kann Druckerzeuger als Sender arbeiten. Die wenigstens eine Welle kann mit einer oder mehreren Anregungsfrequenzen und einer oder mehreren Anregungsamplituden während einer oder mehrerer Anregungszeitdauern erfolgen. Mit anderen Worten kann die Steuereinheit dazu eingerichtet sein, über den Druckerzeuger wenigstens eine Welle mit wenigstens einer Anregungsfrequenz, wenigstens einer Anregungsamplitude und/oder wenigstens einer Anregungszeitdauer anzuregen. Beispielsweise kann die Steuereinheit ein Pulspaket als elektrisches Signal an den Druckerzeuger senden, um die wenigstens eine Welle entsprechend dem Pulspaket anzuregen. Nach der Anregung der wenigstens einen Welle kann der Druckerzeuger ferner das Abklingen und/oder das Abklingverhalten der wenigstens einen Welle detektieren und in ein Abklingsignal wandeln und/oder überführen, welches von der Steuereinheit ausgewertet werden kann. In diesem Fall kann der Druckerzeuger als Empfänger arbeiten. Auch kann zur Detektion des Abklingens der Welle ein gesonderter Sensor vorgesehen sein. Das Abklingverhalten der wenigstens einen Welle kann allgemein ein Abklingen der wenigstens einen Welle über die Zeit bezeichnen. Das Abklingverhalten kann beispielsweise eine Abnahme und/oder Änderung wenigstens einer Amplitude (bzw. Abklingamplitude) über die Zeit, wenigstens einer Abklingfrequenz über die Zeit, wenigstens einer Änderung der Abklingfrequenz über die Zeit, eine Frequenzzusammensetzung der Welle während des Abklingens und/oder wenigstens eine Abklingzeitdauer (z.B. für wenigstens eine Abklingfrequenz) umfassen. Derartige sowie andere das Abklingverhalten charakterisierende bzw. beschreibende Größen und/oder Informationen können in dem Abklingsignal kodiert und/oder enthalten sein.

Gemäß einer Ausführungsform ist die Steuereinheit dazu eingerichtet, basierend auf der Beaufschlagung des Füllmediums mit dem Zusatzdruck wenigstens eine Kenngröße des Druckmittlersystems zu ermitteln. Im Kontext der vorliegenden Offenbarung kann "basierend auf der Beaufschlagung" ein tatsächliches Ausbilden des Zusatzdrucks während des Anregens bzw. Ansteuerns des Druckerzeugers durch die Steuereinheit, d.h. während der Anregungszeitdauer, umfassen. Auch kann "basierend auf der Beaufschlagung" ein Absinken des Zusatzdrucks nach Beendigung des Anregens bzw. Ansteuerns des Druckerzeugers durch die Steuereinheit, d.h. während der Abklingzeitdauer, umfassen. Die Steuereinheit kann beispielsweise dazu eingerichtet sein, basierend auf einer Detektion des Abklingens und/oder des Abklingverhaltens der wenigstens einen Welle, wenigstens eine Kenngröße des Druckmittlersystems zu ermitteln. Die wenigstens eine Kenngröße umfasst dabei zumindest einen Teil einer Abklingkurve, wenigstens eine Abklingfrequenz, wenigstens eine Abklingamplitude, wenigstens eine Resonanzfrequenz der Prozessmembran, eine Dicke der Prozessmembran, eine Steifigkeit der Prozessmembran, eine Elastizität der Prozessmembran, eine Deformation der Prozessmembran, eine Qualität des Füllmediums, eine Eigenschaft des Füllmediums und/oder einen Fülldruck des Füllmediums. Die Abklingkurve kann ein Abklingen der Welle über die Zeit, einen Amplitudenverlauf der Welle über die Zeit und/oder einen Frequenzverlauf der Welle über die Zeit beschreiben.

Gemäß einer Ausführungsform ist die Steuereinheit dazu eingerichtet, eine Veränderung des Druckmittlersystems basierend auf einer Ermittlung wenigstens einer Kenngröße des Druckmittlersystems zu ermitteln. Im Kontext der vorliegenden Offenbarung kann die Ermittlung einer Kenngröße eine Ermittlung eines Kennwertes der Kenngröße bezeichnen. Die Steuereinheit kann etwa dazu eingerichtet sein, die wenigstens eine Kenngröße (bzw. den Kennwert der Kenngröße) aus dem Abklingsignal abzuleiten und/oder zu bestimmen. Alternativ oder zusätzlich ist die Steuereinheit dazu eingerichtet, ein Veränderung des Druckmittlersystems basierend auf einer Ermittlung einer Änderung wenigstens einer Kenngröße (bzw. wenigstens eines Kennwerts der wenigstens einen Kenngröße) des Druckmittlersystems relativ zu wenigstens einem Referenzwert der wenigstens einen Kenngröße zu ermitteln, wobei der wenigstens eine Referenzwert der wenigstens einen Kenngröße beispielsweise in einem Speicher des Druckmittlersystems hinterlegt sein kann. Eine Veränderung des Druckmittlersystems kann sich in einer Veränderung und/oder Änderung einer oder mehrerer Kenngrößen des Druckmittlersystems niederschlagen. Ein Verschleiß und/oder eine Abtragung von Material der Prozessmembran kann beispielsweise eine oder mehrere Kenngrößen der Prozessmembran ändern, wie beispielsweise eine Steifigkeit und/oder eine Dicke der Prozessmembran. Die Änderung der wenigstens einen Kenngröße kann ferner das Abklingverhalten der Welle beeinflussen, so dass durch Ermittlung wenigstens einer Kenngröße basierend auf dem Abklingverhalten eine Veränderung des Druckmittlersystems ermittelt werden kann.

Gemäß einer Ausführungsform ist die Steuereinheit ferner dazu eingerichtet, in Antwort auf eine ermittelte Veränderung des Druckmittlersystems ein Warnsignal auszugeben. Das Warnsignal kann hierbei als elektrisches Signal an einen Empfänger ausgegeben werden. Alternativ oder zusätzlich kann das Warnsignal als optisches Signal, etwa auf einem Anzeigeelement des Druckmittlersystems, und/oder als akustisches Signal, etwa über einen Lautsprecher des Druckmittlersystems, ausgegeben werden. Somit kann ein Benutzer des Druckmittlersystems von der detektierten Veränderung und/oder von einem erkannten Fehler des Druckmittlersystems in Kenntnis gesetzt werden. Auch kann das Druckmittlersystem hierzu weitere Informationen ausgeben, etwa wenigstens eine ermittelte Kenngröße, einen ermittelten Kennwert einer Kenngröße und/oder eine ermittelte Änderung einer Kenngröße des Druckmittlersystems.

Gemäß einer Ausführungsform ist die Steuereinheit ferner dazu eingerichtet, in Antwort auf eine ermittelte Veränderung des Druckmittlersystems eine Kalibrierung des Druckmittlersystems durchzuführen. Mit anderen Worten kann das Druckmittlersystem dazu eingerichtet sein, basierend auf der ermittelten Veränderung automatisiert eine Kalibrierung durchzuführen. Beispielsweise kann bei der Kalibrierung ein Nullpunkt des Druckmittlersystems festgelegt werden, etwa um einem Drift des Systems entgegenzuwirken. Damit kann sichergestellt sein, dass das Druckmittlersystem stets zuverlässige und genaue Druckmesswerte liefert. Insgesamt kann so eine Messgenauigkeit gesteigert sein.

Gemäß einer Ausführungsform weist das Druckmittlersystem mehrere Druckerzeuger auf, welche jeweils dazu ausgeführt sind, das Füllmedium zumindest temporär mit einem Zusatzdruck zu beaufschlagen und/oder eine Welle in dem Füllmedium anzuregen. Beispielsweise können die Druckerzeuger dazu eingerichtet sein, das Abklingverhalten der wenigstens einen Welle an unterschiedlichen Positionen zu detektieren und jeweils ein mit dem Abklingverhalten korrelierendes Abklingsignal zu erzeugen. Beispielsweise können die Druckerzeuger symmetrisch zu einer Mittelachse der Prozessmembran angeordnet sein. Die Steuereinheit kann beispielsweise einen oder mehrere der Druckerzeuger ansteuern, um wenigstens eine Welle anzuregen. Bei Ansteuerung mehrerer Druckerzeuger können diese mit identischen oder voneinander unterschiedlichen Pulspaketen und/oder elektrischen Signalen angeregt werden. Mehrere Druckerzeuger können dabei zeitgleich oder zeitlich versetzt zueinander angesteuert werden. Die Steuereinheit kann ferner eines oder mehrere Abklingsignale von einem oder mehreren Druckerzeugern auswerten, um die Veränderung des Druckmittlersystems zu ermitteln. Beispielsweise können hierzu die Abklingsignale unterschiedlicher Druckerzeuger miteinander verglichen werden.

Ein weiterer Aspekt betrifft ein Verfahren zum Überprüfen einer Funktionstüchtigkeit eines Druckmittlersystems nach Anspruch 14.

Das Abklingen des Zusatzdrucks kann ein Absinken des Zusatzdrucks nach Beendigung der Anregung einer Welle, etwa während der Abklingzeitdauer, bezeichnen. Gleichsam kann das Abklingen des Zusatzdrucks im Kontext der vorliegenden Offenbarung ein Abklingen der wenigstens einen Welle bezeichnen.

Erfindungsgemäß wird eine stehende Welle angeregt, dass beispielsweise ein definierter Pegel entsteht. Es kann ferner eine für die Anregung benötigte Energie ermittelt werden, und basierend darauf kann ein Zustand des Druckmittlersystems und/oder ein Systemzustand des Druckmittlersystems ermittelt werden. Erfindungsgemäß wird die Funktionstüchtigkeit des Druckmittlersystems überprüft.

Merkmale, Elemente und/oder Funktionen des Druckmittlersystems, so wie voranstehend und nachfolgend beschrieben, können Merkmale, Elemente und/oder Schritte des Verfahrens, so wie voranstehend und nachfolgend beschrieben, sein und umgekehrt.

Ein weiterer Aspekt betrifft ein Programmelement, das bei dessen Ausführung auf einer Steuereinheit eines Druckmittlersystems und/oder eines Prozessors der Steuereinheit, das Druckmittlersystem veranlasst, Schritte des Verfahrens, so wie voranstehend und nachfolgend beschrieben, auszuführen. Das Programmelement kann beispielsweise in einem Speicher des Druckmittlersystems hinterlegt sein und/oder entsprechende Softwareinstruktionen umfassen.

Ein weiterer Aspekt betrifft ein computerlesbares Medium, auf welchem ein Programmelement hinterlegt ist, das bei dessen Ausführung auf einer Steuereinheit eines Druckmittlersystems und/oder eines Prozessors der Steuereinheit, das Druckmittlersystem veranlasst, Schritte des Verfahrens, so wie voranstehend und nachfolgend beschrieben, auszuführen.

Im Folgenden werden Ausführungsbeispiele der Erfindung unter Bezugnahme auf die Figuren beschrieben.

### Kurze Beschreibung der Figuren

Fig. 1 zeigt ein Schnittbild eines Druckmittlersystems gemäß einem Ausführungsbeispiel.
Fig. 2 zeigt ein Flussdiagramm zur Illustration von Schritten eines Verfahrens zum Ermitteln einer Veränderung eines Druckmittlersystems gemäß einem Ausführungsbeispiel.

Ähnliche, ähnlich wirkende, gleiche oder gleich wirkende Elemente sind in den Figuren mit ähnlichen oder gleichen Bezugszeichen versehen. Die Figuren sind lediglich schematische und nicht maßstabsgetreu.

### Detaillierte Beschreibung von Ausführungsbeispielen

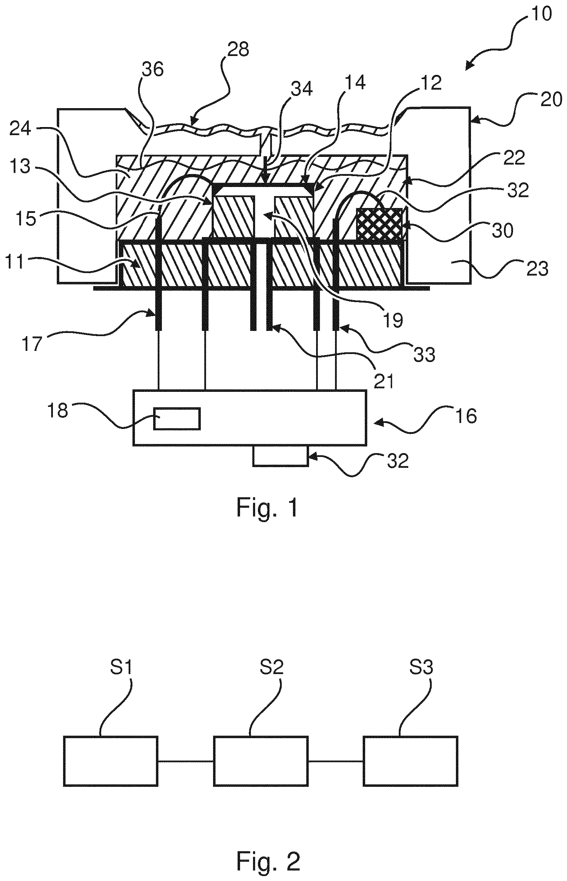

Figur 1 zeigt ein Schnittbild eines Druckmittlersystems 10 gemäß einem Ausführungsbeispiel.

Das Druckmittlersystem 10 weist eine Druckmesszelle 12 mit einem Messchip 14 und/oder einem Chip 14 auf. Der Chip 14 kann allgemein ein Halbleiterchip 14, beispielsweise ein Silizium-basierter Chip 14, sein. Die Druckmesszelle 12 kann beispielsweise eine keramische Druckmesszelle oder eine metallische Druckmesszelle sein. Die Druckmesszelle 12 ist dazu eingerichtet, ein mit einem außenseitig an dem Chip 14 anliegenden Druck korrelierendes Drucksignal, etwa ein elektrisches Drucksignal, auszugeben. Hierzu kann das Druckmittlersystem 10 eine geeignete Elektronik 16 und/oder Steuereinheit 16 aufweisen, mit welcher der Chip 14 gekoppelt sein kann. Im Beispiel der Figur 1 ist der Chip 14 über einen oder mehrere Bonddrähte 15 sowie elektrischen Leitungen 17 mit der Steuereinheit 16 gekoppelt.

Die Druckmesszelle 12 weist ferner einen Glassockel 13 auf, auf welchem der Chip 14 abgestützt und/oder angeordnet ist. Der Glassockel 13 ist ferner auf einem weiteren Sockel 11, etwa einem Titan-Oxid-Sockel 11, angeordnet und/oder abgestützt, wobei der Sockel 11 Durchführungen für die elektrische Leitungen 17 aufweist. Der Glassockel 13 kann etwa mit dem Sockel 11 verklebt sein. Der Glassockel 13 weist ein Innenvolumen 19 auf, welches mit Vakuum oder einem Gas (z.B. mit Luft) befüllt sein kann und welches mit einem Ausgleichsröhrchen 21 fluidisch gekoppelt ist. Ist das Innenvolumen 19 mit Vakuum gefüllt, so kann über den Chip 14 ein Absolutdruck bestimmt werden. Ist das Innenvolumen 19 hingegen mit Medium (z.B. einem Gas und/oder Luft) befüllt, so kann mit dem Chip ein Relativdruck relativ zu dem im Innenvolumen herrschenden Druck des Mediums bestimmt werden. Liegt auf beiden Seiten des Chips ein Prozessdruck an, kann eine Differenzdruckmessung durchgeführt werden.

Ferner weist das Druckmittlersystem 10 einen Druckmittler 20 mit einem Grundkörper 23 (bzw. einem Gehäuse 23) und eine Prozessmembran 28 auf. Die Prozessmembran 28 ist hydraulisch mit der Druckmesszelle 12 und/oder dem Chip 14 der Druckmesszelle 12 gekoppelt. Dies erlaubt eine mechanische Entkopplung der Prozessmembran 28 von der Druckmesszelle 12. Die Prozessmembran 28 kann beispielswiese scheibenförmig, etwa aus Kunststoff oder Metall, ausgebildet sein. Im Beispiel der Figur 1 ist die Prozessmembran 28 zumindest in einem Teilbereich wellenförmig gebogen und/oder gekrümmt ausgebildet. Der Grundkörper 23 bzw. das Gehäuse 23 ist im Beispiel der Figur 1 in einem Bereich, welcher der Prozessmembran 28 gegenüberliegt, kooperierend zu der Prozessmembran 28 ausgestaltet.

Der Grundkörper 23 bzw. das Gehäuse 23 kann einen Prozessanschluss ausbilden und/oder aufweisen. Über den Prozessanschluss kann das Druckmittlersystem 10 beispielsweise an einem Behälter derart montiert werden, dass eine Seite der Prozessmembran 28 einem Medium in dem Behälter zugewandt ist und/oder mit dem Medium in Berührkontakt steht. Die Prozessmembran 28 ist zumindest teilweise elastisch deformierbar, wobei eine Deformation und/oder Auslenkung der Prozessmembran 28 repräsentativ für den auf die Prozessmembran 28 wirkenden Prozessdruck des Mediums ist.

Der Druckmittler 20 weist ferner einen Hydraulikkanal 22 auf, welcher mit einem Füllmedium 24 befüllt ist. Das Füllmedium 24 kann hierbei werkseitig mit einem Vordruck beaufschlagt sein. Bei dem Füllmedium 24 kann es sich beispielsweise um ein Öl, ein Hydraulikmedium, ein Hochtemperaturöl, ein medizinisches Weißöl, Silikonöl, Flüssigmetall, Pflanzenöl und/oder eine beliebige andere Flüssigkeit handeln. Der Hydraulikkanal 22 erstreckt sich dabei von der Druckmesszelle 12 bis zu einer Seite der Prozessmembran 28, so dass die Druckmesszelle 12 über den Hydraulikkanal 22 mit der Prozessmembran 28 in Fluidkommunikation steht. Ein durch das Medium auf die Prozessmembran 28 ausgeübter Prozessdruck kann über das Füllmedium 24 zumindest teilweise auf die Druckmesszelle 12 und/oder den Chip 14 übertragen werden. Das dabei bestimmte Drucksignal ist somit proportional zu dem an der Prozessmembran 28 anliegenden Prozessdruck. Basierend auf dem Drucksignal der Druckmesszelle 12 kann die Steuereinheit 16 optional einen Füllstand und/oder das Erreichen eines Grenzstandes des Mediums ermitteln.

Des Weiteren weist das Druckmittlersystem 10 einen Druckerzeuger 30 auf, welcher im Beispiel der Figur 1 in dem Hydraulikkanal 22 angeordnet ist. Der Druckerzeuger 30 kann jedoch auch außerhalb des Hydraulikkanals 22 angeordnet sein. Beispielsweise kann der Druckerzeuger 30 mit dem Ausgleichsröhrchen gekoppelt sein. Alternativ oder zusätzlich kann der Druckerzeuger dazu eingerichtet sein, optisch Energie in das Füllmedium einzubringen und so den Zusatzdruck zu erzeugen. Das Druckmittlersystem 10 kann auch mehrere Druckerzeuger 30 aufweisen. Der Druckerzeuger 30 der Figur 1 ist exemplarisch auf dem Sockel 11 angeordnet, abgestützt und/oder befestigt. Beispielsweise kann der Druckerzeuger 30 mit dem Sockel 11 verklebt sein. Der Druckerzeuger 30 kann beispielswiese ein piezoelektrischer Druckerzeuger 30 sein. Auch kann der Druckerzeuger 30 ein induktiver Druckerzeuger 30, welcher eine oder mehrere Spulen aufweisen kann, und/oder ein kapazitiver Druckerzeuger 30 sein, welcher einen oder mehrere Kondensatoren aufweisen kann.

Der Druckerzeuger 30 ist über eine elektrische Leitung 32, etwa einen Bonddraht 32, sowie elektrische Leitungen 33 mit der Steuereinheit 16 gekoppelt. Die Steuereinheit 16 kann den Druckerzeuger 30 mit einem elektrischen Signal ansteuern, beispielsweise in Form eines Pulspakets. Das elektrische Signal kann hierbei Informationen über wenigstens eine Anregungsfrequenz, wenigstens eine Anregungsamplitude und/oder wenigstens eine Anregungszeitdauer aufweisen. Derartige Informationen können etwa in einem Speicher 18 der Steuereinheit 16 hinterlegt sein. Basierend auf dem elektrischen Signal regt der Druckerzeuger 30 sodann wenigstens eine Welle mit der wenigstens einen Anregungsfrequenz, der wenigstens einen Anregungsamplitude und/oder der wenigstens einen Anregungszeitdauer in dem Füllmedium 24 an. Durch Ansteuerung des Druckerzeugers 30 durch die Steuereinheit 16 beaufschlagt der Druckerzeuger 30 das Füllmedium 24 mit einem Zusatzdruck 34.

Die Steuereinheit 16 kann den Druckerzeuger 30 beispielsweise derart ansteuern, dass der Druckerzeuger 30 zumindest temporär und/oder zeitlich begrenzt einen statischen Zusatzdruck 34 oder einen zeitlich variablen Zusatzdruck 34 in dem Füllmedium 24 erzeugt. Die Steuereinheit 16 kann basierend auf dem Zusatzdruck 36 eine Überprüfung einer Funktionstüchtigkeit des Druckmittlersystems, insbesondere der Druckmesszelle 12 und/oder des Chips 14, vornehmen. Hierzu kann die Steuereinheit 16 das Drucksignal der Druckmesszelle 12 zumindest während eines Teils der Selbsttestphase, während eines Teils der Anregungszeitdauer und/oder während eines Teils der Abklingzeitdauer auswerten. Das Drucksignal während der Selbsttestphase wird vorliegend auch als Prüfdrucksignal bezeichnet. Die Selbsttestphase kann hierbei die Anregungszeitdauer umfassen, in welcher die Steuereinheit 16 den Druckerzeuger 30 zur Beaufschlagung des Füllmediums 24 mit dem Zusatzdruck 34 ansteuert. Die Selbsttestphase kann jedoch auch die Abklingzeitdauer umfassen, in welcher der Zusatzdruck 34 wieder absinkt, beispielsweise vollständig absinkt, wie nachfolgend im Detail erläutert.

Zum Überprüfen der Funktionstüchtigkeit des Druckmittlersystems 10 kann die Steuereinheit 16 basierend auf dem Prüfdrucksignal einen Prüfdruckwert ermitteln und diesen mit einem in dem Speicher 18 hinterlegten Referenzwert vergleichen. Der Prüfdruckwert kann dabei repräsentativ für den Zusatzdruck 34 und den im Füllmedium 24 vorherrschenden Fülldruck des Füllmediums 24 sein. Damit kann beispielsweise ein Fehler und/oder eine Fehlfunktion des Chips 14 ermittelt und/oder detektiert werden. Auch kann auf diese Weise der Fülldruck des Füllmediums 24 und/oder eine Abweichung des Fülldrucks von einem vorbestimmten Referenzdruck, etwa dem Vordruck, des Füllmediums 24 ermittelt werden. Auch kann allgemein basierend auf dem Zusatzdruck 24 eine Veränderung des Druckmittlersystems 10, etwa eine mechanische Veränderung der Prozessmembran 28, beispielsweise durch Verschleiß, und/oder wenigstens eine Kenngröße des Druckmittlersystems 10 bestimmt werden, wie nachstehend detailliert erläutert.

Zum Beaufschlagen des Füllmediums 24 mit dem Zusatzdruck 34 kann die Steuereinheit 16 den Druckerzeuger 30 beispielsweise derart ansteuern, dass der Druckerzeuger 30 in dem Füllmedium 24 eine Welle 36 erzeugt. Die Welle 36 ist in der erfindungsgemäßen Verkörperung der Figur 1 eine stehende Welle 36 mit einer Resonanzfrequenz, welche durch eine Geometrie des Hydraulikkanals 22 definiert ist, sodass der Zusatzdruck 34 während der Anregung der Welle 34 und/oder während der der Anregungszeitdauer statisch ist. Die Resonanzfrequenz kann dabei eine Eigenresonanz bzw. Eigenmode des Hydraulikkanals 22 bezeichnen, beispielsweise in wenigstens einer Raumrichtung. Die stehende Welle 36 ist in Figur 1 exemplarisch orthogonal zu einer axialen Richtung des Druckmittlersystems 10 (bzw. parallel zur Prozessmembran 28) ausgebildet. Die axiale Richtung kann hierbei parallel zu einem Flächennormalenvektor der Prozessmembran 28 und/oder parallel zu einer Mittelachse (bzw. Symmetrieachse) der Prozessmembran 28 verlaufen. Grundsätzlich kann die stehende Welle 36 jedoch in beliebiger Raumrichtung innerhalb des Hydraulikkanals 22 ausgebildet werden, um so den Zusatzdruck 34 zu erzeugen. Zumindest ein Teil des Hydraulikkanals 22 kann somit als Resonator dienen, in welchem die stehende Welle 36 mit der zugehörigen Resonanzfrequenz des Resonators angeregt werden kann.

Auch können mehrere stehende Wellen 36 oder eine Kombination wenigstens einer stehenden und einer nicht-stehenden Welle 36 in dem Hydraulikkanal 22 angeregt werden.

Beispielsweise kann der Druckerzeuger 30 mehrere stehende Wellen 36 erzeugen, welche sich hinsichtlich ihrer Ordnung und/oder der Ordnung der zugehörigen Resonanzfrequenz zumindest teilweise unterscheiden können. Alternativ oder zusätzlich können mehrere stehende Wellen 36 in zumindest teilweise unterschiedlichen Raumrichtungen ausgebildet werden. Beispielsweise kann der Druckerzeuger dazu eingerichtet sein, in mehreren Teilen des Hydraulikkanals 22 jeweils eine stehende Welle 36 mit der zugehörigen Resonanzfrequenz des jeweiligen Teils des Hydraulikkanals 22 zu erzeugen.

Der Druckerzeuger 30 kann ferner dazu eingerichtet sein, mehrere Wellen 36 sequentiell, zeitlich versetzt zueinander und/oder nacheinander anzuregen.

Des Weiteren kann der Druckerzeuger 30 dazu eingerichtet sein, nach Anregung einer Welle 36 und/oder nach Beendigung der Anregung mit der Welle das Abklingverhalten der Welle 36 über zumindest einen Teil einer Abklingzeitdauer zu detektieren, innerhalb derer die Welle 36 vollständig abklingt. Hierzu kann der Druckerzeuger 30 Druckschwankungen im Füllmedium 24 in ein elektrisches Abklingsignal wandeln, welches von der Steuereinheit 16 ausgewertet und/oder verarbeitet werden kann. Die Steuereinheit 16 kann basierend auf dem Abklingsignal eine Veränderung des Druckmittlersystems 10 bestimmen, beispielsweise relativ zu einem Referenzzustand des Druckmittlersystems 10.

Zum Ermitteln der Veränderung des Druckmittlersystems 10 kann die Steuereinheit 16 etwa eine oder mehrere Kenngrößen (bzw. einen oder mehrere Kennwerte von einer oder mehreren Kenngrößen) des Druckmittlersystems 10 und/oder eine Änderung einer oder mehrerer Kenngrößen (bzw. Kennwerten) relativ zu einem oder mehreren Referenzwerten ermitteln. Die Referenzwerte können beispielsweise in dem Speicher 18 hinterlegt sein. Als mögliche Kenngröße kann die Steuereinheit 16 beispielsweise zumindest einen Teil einer Abklingkurve, wenigstens eine Abklingfrequenz der Welle 36, wenigstens eine Abklingamplitude der Welle 36, wenigstens eine Resonanzfrequenz der Prozessmembran 28, eine Dicke der Prozessmembran 28, eine Steifigkeit der Prozessmembran 28, eine Elastizität der Prozessmembran 28, eine Deformation der Prozessmembran 28 und/oder einen Fülldruck des Füllmediums 24 ermitteln. Die Abklingkurve kann beispielsweise durch Ermitteln der Abklingamplituden einer oder mehrerer Abklingfrequenzen über die Zeit bestimmt werden. Die Steuereinheit 16 kann hierbei auch aus einer Kenngröße weitere Kenngrößen ableiten. Beispielsweise kann die Dicke der Prozessmembran 28 basierend auf der Abklingkurve ermittelt werden kann.

Die Steuereinheit 16 kann beispielsweise dazu eingerichtet sein, zu ermitteln, wie schnell die Welle 36 abklingt, mit welcher Frequenz (bzw. mit welchen Frequenzen) und/oder mit welcher Amplitude (bzw. mit welchem Amplituden) die Welle 36 ausschwingt. Basierend auf einer derart bestimmten Frequenz und/oder Abklingfrequenz kann so die Resonanzfrequenz der Prozessmembran 28 ermittelt werden, welche wiederum Rückschlüsse auf strukturelle und/oder mechanische Eigenschaften der Prozessmembran 28 erlauben kann, wie etwa eine Dicke und/oder eine Steifigkeit der Prozessmembran 28. Alternativ oder zusätzlich kann die Steuereinheit 16 wenigstens eine Anregungsamplitude und/oder wenigstens eine Anregungsfrequenz ermitteln, mit welcher die Prozessmembran 28 anregbar ist. Auch dies kann Rückschlüsse auf die Resonanzfrequenz der Prozessmembran 28 und/oder deren Eigenschaften zulassen.

Optional kann die Steuereinheit 16 dazu eingerichtet sein, basierend auf der ermittelten Veränderung des Druckmittlersystems 10, basierend auf wenigstens einer Kenngröße und/oder basierend auf einer Änderung wenigstens einer Kenngröße eine Anpassung eines oder mehrerer Messparameter vorzunehmen. Die Messparameter können beispielsweise in dem Speicher 18 hinterlegt sein. Beispielsweise kann die Steuereinheit 16 eine Parametrierung vornehmen, wenn eine Veränderung des Druckmittlersystems 10 ermittelt wurde. Beispielsweise kann ein Nullpunkt des Druckmittlersystems 10 in Abhängigkeit wenigstens einer Kenngröße festgelegt und/oder geändert werden, etwa um einer Änderung des Fülldrucks des Füllmediums 24 entgegenzuwirken.

Des Weiteren kann die Steuereinheit 16 in Antwort auf eine ermittelte Veränderung des Druckmittlersystems 10 ein Warnsignal ausgeben, etwa an einer Signalanzeige 32 des Druckmittlersystems 10 und/oder ein elektrisches Warnsignal ausgeben. Beispielsweise kann wenigstens ein Schwellwert für wenigstens eine Kenngröße in dem Speicher 18 hinterlegt sein. Bei Erreichen des Schwellwerts kann die Steuereinheit 16 das Warnsignal generieren und/oder ausgeben. Figur 2 zeigt ein Flussdiagramm zur Illustration von Schritten eines Verfahrens zum Überprüfen einer Funktionstüchtigkeit eines Druckmittlersystems 10 gemäß einem Ausführungsbeispiel. Bei dem Druckmittlersystem 10 kann es sich um das mit Bezug auf Figur 1 beschriebene Druckmittlersysteme 10 handeln.

In einem Schritt S1 wird durch den Druckerzeuger 30 das Füllmedium 24 des Hydraulikkanals 22 des Druckmittlersystems 10 mit einem Zusatzdruck 34 beaufschlagt.

In einem weiteren Schritt S2 wird ein Prüfdrucksignal mit der Druckmesszelle 12 des Druckmittlersystems 10 während des Beaufschlagens des Füllmediums 24 mit dem Zusatzdruck 34 und/oder während des Abklingens des Zusatzdrucks 34 (bzw. einer Welle 36) erfasst.

In einem weiteren Schritt S3 wird die Funktionstüchtigkeit zumindest eines Teils des Druckmittlersystems 10 basierend auf dem Prüfdrucksignal ermittelt.

## Patentansprüche

1. Druckmittlersystem (10) zum Ermitteln eines Druckes eines Mediums, das Druckmittlersystem (10) aufweisend:
eine Druckmesszelle (12) zur Ausgabe eines Drucksignals, welches proportional zu einem an der Druckmesszelle (12) anliegenden Druck ist;
einen Druckmittler (20) mit einem Hydraulikkanal (22), einer Prozessmembran (28) und einem Füllmedium (24), wobei sich der Hydraulikkanal zwischen der Druckmesszelle (12) und der Prozessmembran (28) erstreckt und dazu ausgebildet ist, das Füllmedium (24) zu bevorraten, so dass ein auf die Prozessmembran (28) wirkender Prozessdruck des Mediums über das Füllmedium (24) zumindest teilweise auf die Druckmesszelle (12) übertragbar ist;
wenigstens einen Druckerzeuger (30), welcher dazu ausgeführt ist, das Füllmedium (24) des Hydraulikkanals (22) zumindest temporär mit einem Zusatzdruck (34) zu beaufschlagen;
eine Steuereinheit (16), welche dazu eingerichtet ist, basierend auf der zumindest temporären Beaufschlagung des Füllmediums (24) mit dem Zusatzdruck (34) zumindest einen Teil des Druckmittlersystems (10) auf Funktionstüchtigkeit zu überprüfen; **dadurch gekennzeichnet, dass**
der wenigstens eine Druckerzeuger (30) dazu eingerichtet ist, den Zusatzdruck (34) in dem Füllmedium (24) des Hydraulikkanals durch Anregen wenigstens einer stehenden Welle (36) mit wenigsten einer Resonanzfrequenz zu erzeugen.

2. Druckmittlersystem (10) nach Anspruch 1,
wobei der wenigstens eine Druckerzeuger (30) dazu eingerichtet ist, das Füllmedium (24) des Hydraulikkanals (22) zumindest temporär mit einem statischen Zusatzdruck (34) zu beaufschlagen; und/oder
wobei der Zusatzdruck (34) ein statischer Zusatzdruck (34) ist.

3. Druckmittlersystem (10) nach einem der voranstehenden Ansprüche,
wobei der wenigstens eine Druckerzeuger (30) dazu eingerichtet ist, den Zusatzdruck (34) in dem Füllmedium (24) des Hydraulikkanals durch Anregen einer Mehrzahl stehender Wellen (36) zu erzeugen;
wobei sich die Resonanzfrequenzen der mehreren stehenden Wellen (36) zumindest teilweise voneinander unterscheiden.

4. Druckmittlersystem (10) nach Anspruch 3,
wobei der wenigstens eine Druckerzeuger (30) dazu eingerichtet ist, die stehenden Wellen (36) der Mehrzahl von stehenden Wellen sequentiell, zeitlich versetzt zueinander und/oder nacheinander anzuregen.

5. Druckmittlersystem (10) nach einem der voranstehenden Ansprüche,
wobei der wenigstens eine Druckerzeuger (30) direkt mit dem Füllmedium (24) des Hydraulikkanals (22) gekoppelt ist; und/oder
wobei der wenigstens eine Druckerzeuger (30) zumindest teilweise in dem Hydraulikkanal angeordnet ist.

6. Druckmittlersystem (10) nach einem der Ansprüche 1 bis 4,
wobei der wenigstens eine Druckerzeuger (30) indirekt mit dem Füllmedium (24) des Hydraulikkanals gekoppelt ist; und/oder
wobei der wenigstens eine Druckerzeuger zumindest teilweise außerhalb des Hydraulikkanals angeordnet ist.

7. Druckmittlersystem (10) nach einem der voranstehenden Ansprüche,
wobei der wenigstens eine Druckerzeuger (30) ein piezoelektrischer Druckerzeuger, ein induktiver Druckerzeuger und/oder ein kapazitiver Druckerzeuger ist.

8. Druckmittlersystem (10) nach einem der voranstehenden Ansprüche,
wobei die Steuereinheit (16) dazu eingerichtet ist, die Funktionstüchtigkeit zumindest des Teils des Druckmittlersystems basierend auf einem Prüfdrucksignal der Druckmesszelle (12) zu überprüfen;
wobei das Prüfdrucksignal das Drucksignal der Druckmesszelle ist, welches während der Beaufschlagung das Füllmediums des Hydraulikkanals mit dem Zusatzdruck von der Druckmesszelle ermittelt ist.

9. Druckmittlersystem (10) nach Anspruch 8,
wobei die Steuereinheit (16) dazu eingerichtet ist, basierend auf dem Prüfdrucksignal wenigstens einen Prüfdruckwert zu ermitteln; und
wobei die Steuereinheit dazu eingerichtet ist, zur Überprüfung der Funktionstüchtigkeit zumindest des Teils des Druckmittlersystems den wenigstens einen Prüfdruckwert mit wenigstens einem Referenzwert zu vergleichen.

10. Druckmittlersystem (10) nach einem der voranstehenden Ansprüche,
wobei die Druckmesszelle einen Chip (14) aufweist; und
wobei die Steuereinheit (16) dazu eingerichtet ist, basierend auf der zumindest temporären Beaufschlagung des Füllmediums (24) mit dem Zusatzdruck (36) eine Funktionstüchtigkeit des Chips (14) zu überprüfen.

11. Druckmittlersystem (10) nach einem der voranstehenden Ansprüche,
wobei die Steuereinheit (10) dazu eingerichtet ist, basierend auf der zumindest temporären Beaufschlagung des Füllmediums (24) mit dem Zusatzdruck (34) einen Fülldruck des Füllmediums (24) zu ermitteln und/oder eine Veränderung eines Fülldrucks des Füllmediums (24) relativ zu einem Referenzfülldruck zu bestimmen.

12. Druckmittlersystem (10) nach einem der voranstehenden Ansprüche,
wobei der wenigstens eine Druckerzeuger (30) dazu eingerichtet ist, den Zusatzdruck (34) in dem Füllmedium des Hydraulikkanals durch Anregen wenigstens einer Welle (36) in dem Füllmedium (24) zu erzeugen; und
wobei die Steuereinheit dazu eingerichtet ist, die Funktionstüchtigkeit zumindest des Teils des Druckmittlersystems basierend auf einer Detektion eines Abklingens und/oder eines Abklingverhaltens der wenigstens einen Welle (36) zu überprüfen.

13. Druckmittlersystem (10) nach einem der voranstehenden Ansprüche,
wobei die Steuereinheit (16) dazu eingerichtet, basierend auf der Beaufschlagung des Füllmediums mit dem Zusatzdruck wenigstens eine Kenngröße des Druckmittlersystems zu ermitteln; und
wobei die wenigstens eine Kenngröße zumindest einen Teil einer Abklingkurve, wenigstens eine Abklingfrequenz, wenigstens eine Abklingamplitude, wenigstens eine Resonanzfrequenz der Prozessmembran (28), eine Dicke der Prozessmembran (28), eine Steifigkeit der Prozessmembran (28), eine Elastizität der Prozessmembran (28), eine Deformation der Prozessmembran (28), eine Qualität des Füllmediums (24), eine Eigenschaft des Füllmediums (24) und/oder einen Fülldruck des Füllmediums (24) umfasst.

14. Verfahren zum Überprüfen einer Funktionstüchtigkeit eines Druckmittlersystems (10) nach einem der voranstehenden Ansprüche, das Verfahren aufweisend:
Beaufschlagen, durch den Druckerzeuger (30), des Füllmediums (24) des Hydraulikkanals (22) des Druckmittlersystems mit dem Zusatzdruck (36) mittels Anregen wenigstens einer stehenden Welle (36) in dem Hydraulikkanal mit wenigstens der Resonanzfrequenz;
Erfassen eines Prüfdrucksignals mit der
Druckmesszelle (12) des Druckmittlersystems (10) während des Beaufschlagens des Füllmediums mit dem Zusatzdruck und/oder während des Abklingens des Zusatzdrucks (34); und
Überprüfen der Funktionstüchtigkeit zumindest eines Teils des Druckmittlersystems basierend auf dem Prüfdrucksignal.

## Claims

1. Diaphragm seal system (10) for determining a pressure of a medium, the diaphragm seal system (10) comprising:
a pressure measuring cell (12) for outputting a pressure signal which is proportional to a pressure present at the pressure measuring cell (12);
a diaphragm seal (20) with a hydraulic channel (22), a process diaphragm (28) and a filling medium (24), wherein the hydraulic channel extends between the pressure measuring cell (12) and the process diaphragm (28) and is designed to store the filling medium (24), such that a process pressure of the medium acting on the process diaphragm (28) is at least partially transmittable to the pressure measuring cell (12) via the filling medium (24);
at least one pressure generator (30) which is designed to at least temporarily apply an additional pressure (34) to the filling medium (24) of the hydraulic channel (22);
a control unit (16) which is set up to check at least part of the diaphragm seal system (10) for functionality based on the at least temporary application of the additional pressure (34) to the filling medium (24);
**characterized in that**
the at least one pressure generator (30) is set up to generate the additional pressure (34) in the filling medium (24) of the hydraulic channel by stimulating at least one standing wave (36) with at least one resonance frequency.

2. Diaphragm seal system (10) according to claim 1,
wherein the at least one pressure generator (30) is set up to apply the filling medium (24) of the hydraulic channel (22) at least temporarily with a static additional pressure (34); and/or
wherein the additional pressure (34) is a static additional pressure (34).

3. Diaphragm seal system (10) according to one of the preceding claims,
wherein the at least one pressure generator (30) is set up to generate the additional pressure (34) in the filling medium (24) of the hydraulic channel by stimulating a plurality of standing waves (36);
wherein the resonance frequencies of the several standing waves (36) are at least partially different to each other.

4. Diaphragm seal system (10) according to claim 3,
wherein the at least one pressure generator (30) is set up to stimulate the standing waves (36) of the plurality of standing waves sequentially, offset in time to one another and/or one after the other.

5. Diaphragm seal system (10) according to one of the preceding claims,
wherein the at least one pressure generator (30) is coupled directly to the filling medium (24) of the hydraulic channel (22); and/or
wherein the at least one pressure generator (30) is arranged at least partially in the hydraulic channel.

6. Diaphragm seal system (10) according to any one of claims 1 to 4,
wherein the at least one pressure generator (30) is indirectly coupled to the filling medium (24) of the hydraulic channel; and/or
wherein the at least one pressure generator is arranged at least partially outside the hydraulic channel.

7. Diaphragm seal system (10) according to one of the preceding claims, wherein the at least one pressure generator (30) is a piezoelectric pressure generator, an inductive pressure generator and/or a capacitive pressure generator.

8. Diaphragm seal system (10) according to one of the preceding claims,
wherein the control unit (16) is set up to check the functionality of at least part of the diaphragm seal system based on a test pressure signal of the pressure measuring cell (12);
wherein the test pressure signal is the pressure signal of the pressure measuring cell, which is determined by the pressure measuring cell during the application of the filling medium of the hydraulic channel with the additional pressure.

9. Diaphragm seal system (10) according to claim 8,
wherein the control unit (16) is set up to determine at least one test pressure value based on the test pressure signal; and
wherein the control unit is set up to compare the at least one test pressure value with at least one reference value in order to check the functionality of at least part of the diaphragm seal system.

10. Diaphragm seal system (10) according to any one of the preceding claims,
wherein the pressure measuring cell comprisees a chip (14); and
wherein the control unit (16) is set up to check a functionality of the chip (14) based on the at least temporary application of the additional pressure (36) to the filling medium (24).

11. Diaphragm seal system (10) according to one of the preceding claims, wherein the control unit (10) is set up to determine a filling pressure of the filling medium (24) based on the at least temporary application of the additional pressure (34) to the filling medium (24) and/or to determine a change in a filling pressure of the filling medium (24) relative to a reference filling pressure.

12. Diaphragm seal system (10) according to one of the preceding claims,
wherein the at least one pressure generator (30) is set up to generate the additional pressure (34) in the filling medium of the hydraulic channel by stimulating at least one wave (36) in the filling medium (24); and
wherein the control unit is set up to check the functionality of at least part of the diaphragm seal system based on a detection of a decay and/or a decay behavior of the at least one wave (36).

13. Diaphragm seal system (10) according to one of the preceding claims,
wherein the control unit (16) is set up to determine at least one parameter of the diaphragm seal system based on the application of the filling medium with the additional pressure; and
wherein the at least one parameter comprises at least part of a decay curve, at least one decay frequency, at least one decay amplitude, at least one resonance frequency of the process diaphragm (28), a thickness of the process diaphragm (28), a rigidity of the process diaphragm (28), an elasticity of the process diaphragm (28 ), a deformation of the process diaphragm (28), a quality of the filling medium (24), a property of the filling medium (24) and/or a filling pressure of the filling medium (24).

14. Method for checking the functionality of a diaphragm seal system (10) according to one of the preceding claims, the method comprising:
applying, by the pressure generator (30), the filling medium (24) of the hydraulic channel (22) of the diaphragm seal system with the additional pressure (36) by stimulating at least one standing wave (36) in the hydraulic channel with at least the resonance frequency;
detecting a test pressure signal with the pressure measuring cell (12) of the diaphragm seal system (10) during the application of the additional pressure to the filling medium and/or during the decay of the additional pressure (34); and
checking the functionality of at least part of the diaphragm seal system based on the test pressure signal.

## Revendications

1. Système de transmission de pression (10) pour déterminer une pression d'un milieu, le système de transmission de pression (10) présentant :
une cellule de mesure de pression (12) pour émettre un signal de pression qui est proportionnel à une pression appliquée à la cellule de mesure de pression (12) ;
un transmetteur de pression (20) avec un canal hydraulique (22), une membrane de processus (28) et un milieu de remplissage (24),
dans lequel le canal hydraulique s'étend entre la cellule de mesure de pression (12) et la membrane de processus (28) et est conçu pour stocker le milieu de remplissage (24) de telle sorte qu'une pression de processus du milieu agissant sur la membrane de processus (28) puisse être transmise au moins partiellement à la cellule de mesure de pression (12) par l'intermédiaire du milieu de remplissage (24) ;
au moins un générateur de pression (30) qui est réalisé pour appliquer au moins temporairement une pression supplémentaire (34) au milieu de remplissage (24) du canal hydraulique (22) ;
une unité de commande (16) qui est conçue pour vérifier la fonctionnalité d'au moins une partie du système de transmission de pression (10) sur la base de l'application au moins temporaire de la pression supplémentaire (34) au milieu de remplissage (24) ;
**caractérisé en ce que** ledit au moins un générateur de pression (30) est conçu pour générer la pression supplémentaire (34) dans le milieu de remplissage (24) du canal hydraulique par excitation d'au moins une onde stationnaire (36) à au moins une fréquence de résonance.

2. Système de transmission de pression (10) selon la revendication 1,
dans lequel ledit au moins un générateur de pression (30) est conçu pour appliquer au moins temporairement une pression supplémentaire statique (34) au milieu de remplissage (24) du canal hydraulique (22) ; et/ou dans lequel la pression supplémentaire (34) est une pression supplémentaire statique (34).

3. Système de transmission de pression (10) selon l'une des revendications précédentes,
dans lequel ledit au moins un générateur de pression (30) est conçu pour générer la pression supplémentaire (34) dans le milieu de remplissage (24) du canal hydraulique par excitation d'une pluralité d'ondes stationnaires (36) ; dans lequel les fréquences de résonance de la pluralité d'ondes stationnaires (36) sont au moins partiellement différentes les unes des autres.

4. Système de transmission de pression (10) selon la revendication 3,
dans lequel ledit au moins un générateur de pression (30) est conçu pour exciter les ondes stationnaires (36) de la pluralité d'ondes stationnaires de manière séquentielle, décalée dans le temps les unes par rapport aux autres et/ou les unes après les autres.

5. Système de transmission de pression (10) selon l'une des revendications précédentes,
dans lequel ledit au moins un générateur de pression (30) est couplé directement au milieu de remplissage (24) du canal hydraulique (22) ; et/ou
dans lequel ledit au moins un générateur de pression (30) est disposé au moins partiellement dans le canal hydraulique.

6. Système de transmission de pression (10) selon l'une des revendications 1 à 4,
dans lequel ledit au moins un générateur de pression (30) est couplé indirectement au milieu de remplissage (24) du canal hydraulique ; et/ou
dans lequel ledit au moins un générateur de pression est disposé au moins partiellement à l'extérieur du canal hydraulique.

7. Système de transmission de pression (10) selon l'une des revendications précédentes,
dans lequel ledit au moins un générateur de pression (30) est un générateur de pression piézoélectrique, un générateur de pression inductif et/ou un générateur de pression capacitif.

8. Système de transmission de pression (10) selon l'une des revendications précédentes,
dans lequel l'unité de commande (16) est conçue pour vérifier la fonctionnalité d'au moins la partie du système de transmission de pression sur la base d'un signal de pression de contrôle de la cellule de mesure de pression (12) ;
dans lequel le signal de pression de contrôle est le signal de pression de la cellule de mesure de pression qui est déterminé par la cellule de mesure de pression pendant l'application de la pression supplémentaire au milieu de remplissage du canal hydraulique.

9. Système de transmission de pression (10) selon la revendication 8,
dans lequel l'unité de commande (16) est conçue pour déterminer au moins une valeur de pression de contrôle sur la base du signal de pression de contrôle ; et
dans lequel l'unité de commande est conçue pour comparer ladite au moins une valeur de pression de contrôle avec au moins une valeur de référence afin de vérifier la fonctionnalité d'au moins la partie du système de transmission de pression.

10. Système de transmission de pression (10) selon l'une des revendications précédentes,
dans lequel la cellule de mesure de pression présente une puce (14) ; et
dans lequel l'unité de commande (16) est conçue pour vérifier la fonctionnalité de la puce (14) sur la base de l'application au moins temporaire de la pression supplémentaire (36) au milieu de remplissage (24).

11. Système de transmission de pression (10) selon l'une des revendications précédentes,
dans lequel l'unité de commande (10) est conçue pour déterminer une pression de remplissage du milieu de remplissage (24) sur la base de l'application au moins temporaire de la pression supplémentaire (36) au milieu de remplissage (24) et/ou pour déterminer une variation d'une pression de remplissage du milieu de remplissage (24) par rapport à une pression de remplissage de référence.

12. Système de transmission de pression (10) selon l'une des revendications précédentes,
dans lequel ledit au moins un générateur de pression (30) est conçu pour générer la pression supplémentaire (34) dans le milieu de remplissage du canal hydraulique par excitation d'au moins une onde (36) dans le milieu de remplissage (24) ; et
dans lequel l'unité de commande est conçue pour vérifier la fonctionnalité d'au moins la partie du système de transmission de pression sur la base d'une détection d'une décroissance et/ou d'un comportement de décroissance de ladite au moins une onde (36).

13. Système de transmission de pression (10) selon l'une des revendications précédentes,
dans lequel l'unité de commande (16) est conçue pour déterminer au moins une grandeur caractéristique du système de transmission de pression sur la base de l'application de la pression supplémentaire au milieu de remplissage ; et
dans lequel ladite au moins une grandeur caractéristique comprend au moins une partie d'une courbe de décroissance, au moins une fréquence de décroissance, au moins une amplitude de décroissance, au moins une fréquence de résonance de la membrane de processus (28), une épaisseur de la membrane de processus (28), une rigidité de la membrane de processus (28), une élasticité de la membrane de processus (28), une déformation de la membrane de processus (28), une qualité du milieu de remplissage (24), une propriété du milieu de remplissage (24) et/ou une pression de remplissage du milieu de remplissage (24).

14. Procédé pour vérifier la fonctionnalité d'un système de transmission de pression (10) selon l'une des revendications précédentes, le procédé comprenant les étapes consistant à :
appliquer, par le générateur de pression (30), la pression supplémentaire (36) au milieu de remplissage (24) du canal hydraulique (22) du système de transmission de pression par excitation d'au moins une onde stationnaire (36) dans le canal hydraulique à au moins la fréquence de résonance ;
détecter un signal de pression de contrôle avec la cellule de mesure de pression (12) du système de transmission de pression (10) pendant l'application de la pression supplémentaire au milieu de remplissage et/ou pendant la décroissance de la pression supplémentaire (34) ; et
vérifier la fonctionnalité d'au moins une partie du système de transmission de pression sur la base du signal de pression de contrôle.
